# EUROPÄISCHE PATENTSCHRIFT

(11) **EP 2 576 057 B1**
(45) Veröffentlichungstag und Bekanntmachung des Hinweises auf die Patenterteilung: **23.03.2016**
(21) Anmeldenummer: 11723217.3
(22) Anmeldetag: 26.05.2011
(51) Int. Cl.: B01L 3/00, F16K 7/04

(54) **HANDBEDIENTEIL EINER ABSAUGVORRICHTUNG**
MANUAL CONTROL PART OF A SUCTION DEVICE
ÉLÉMENT DE COMMANDE MANUELLE D'UN DISPOSITIF D'ASPIRATION

(30) Priorität: 26.05.2010 CH 8172010
(43) Veröffentlichungstag der Anmeldung: 10.04.2013
(73) Patentinhaber: INTEGRA Biosciences AG, 7205 Zizers (CH)
(72) Erfinder: BÄCHI, Daniel, CH-9469 Haag (CH); MORSCHER, Elmar, CH-7013 Domat/Ems (CH)
(74) Vertreter: Hasler, Erich
(86) Internationale Anmeldenummer: PCT/CH2011/000123
(87) Internationale Veröffentlichungsnummer: WO 2011/147043

(56) Entgegenhaltungen:
- WO-A1-89/00262
- WO-A1-93/22057
- US-A- 2 706 101
- US-A- 4 913 401
- US-A- 6 039 305

## Beschreibung

### Gebiet der Erfindung

Die Erfindung betrifft ein Handbedienteil einer Absaugvorrichtung gemäss Oberbegriff des Anspruchs 1.

### Stand der Technik

Zur Absaugung von flüssigen Überständen, beispielsweise aus offenen Behältnissen werden insbesondere in Labors oder in der Medizintechnik Absaugvorrichtungen, auch als Aspiratoren bezeichnet, verwendet. Eine Absaugleitung ist mit einem ersten Ende zumeist an einer Vakuumpumpe angeschlossen. Zur Aktivierung bzw. Deaktivierung der Absaugfunktion steht ein Ventil mit der Absaugleitung in Wirkverbindung. Das Ventil ist zumeist in einem Handbedienteil aufgenommen, um dem Benutzer eine einfache Bedienung des Ventils zu ermöglichen. Eine Möglichkeit einer Ventilfunktion besteht darin, dass eine Klemmrolle die Absaugleitung abklemmt und freigibt. Die Klemmrolle ist gegen die Absaugleitung vorgespannt und ist durch eine Bedientaste von der Absaugleitung wegdrückbar, wodurch die Absaugleitung freigegeben wird. Weitere Ventilfunktionen sind dadurch realisiert, dass ein Kolben- bzw. ein Nadelventil in die Absaugleitung integriert sind und über an dem Handbedienteil angeordnete Tasten ansteuerbar sind. Die beschriebenen Handbedienteile zeichnen sich durch eine einfache und genaue Einstellung der Absaugleistung mit nur einer Hand aus. Die Handbedienteile sind jedoch relativ aufwendig aufgebaut und sind dement-sprechend schwer zu reinigen und dementsprechend teuer in der Herstellung.

Die US 4,913,401 zeigt eine Ventilanordnung mit einem Ventileinlassteil und einem Ventilauslassteil. Die beiden Ventilteile wirken mit einer O-Ring Dichtung zusammen. Die Ventilteile und die Dichtung sind in einem elastischen Schlauch aufgenommen. Die Dichtung ist axial nicht beweglich, da sie durch konische Oberflächenteile der beiden Dichtteile begrenzt ist. Wird der Schlauch durch Fingerdruck zusammengedrückt, so bildet sich ein Durchlass zwischen der Dichtung und einem Verlängerungsteil des Ventilauslassteils, auf welchem die Dichtung angeordnet ist. Ein Fluid durchströmt dann die Ventilanordnung durch Hinterschneidungen, welche im Ventileinlassteil vorgesehen sind, den Zwischenraum, den Durchlass, den Zwischenraum und Nuten, welche an der Oberfläche des Ventilauslassteils vorgesehen sind, in der angeführten Reihenfolge. Die Ventilanordnung besitzt lediglich vier Einzelteile und ist dementsprechend leicht zu zerlegen. Die Dosierung mittels der Ventilanordnung ist jedoch ungenau, da der gesamte Umfang der beiden konischen Oberflächenteile als Ventilsitz für den O-Ring dient, wodurch bei Zusammendrücken des Schlauchs kein genau definierter Durchlass definiert wird.

Das Ventil, welches in der US 2,706,101 vorgeschlagen ist, ist in ähnlicher Weise wie vorstehend beschriebene Ventilanordnung ausgeführt. Das Ventil besitzt eine Gummiumhüllung in welcher eine erste und zweite Kammer definiert sind. Am Übergang der beiden Kammern ist an der Gummiumhüllung ein Dichtflansch vorgesehen. Der Dichtflansch wirkt mit einem Rohr zusammen, welches die Gummiumhüllung axial durchdringt und aus einem Einlassteil, einem Mittelteil und einem Auslassteil besteht. Wird die Gummiumhüllung mittels Fingerdruck im Bereich des Dichtflansches zusammengedrückt, so wird eine Durchlassöffnung zwischen Mittelteil und Dichtflansch frei, welche dazu führt, dass das Ventil durchströmbar wird. Dafür ist auch noch wesentlich, dass das Rohr eine Auslassöffnung und eine Einlassöffnung besitzt und die Rohrdurchströmung zwischen diesen Öffnungen durch eine Sperre unterbrochen ist. Auch dieses Ventil ist leicht zerlegbar. Durch die Sperre entstehen in dem Rohr Toträume, welche eine einfache Reinigung erschweren. Ferner wirkt der gesamte Umfang des Rohres als Ventilsitz für den Dichtflansch. Durch die Durchlassöffnung, welche sich bei Deformierung des Dichtflanschs bildet, kann kein definierter Querschnitt gebildet werden. Die Dosierung mittels dieses Ventils ist demnach ungenau.

Die WO 89/00262 beschreibt ein deformierbares Ventil mit einem Ventilkörper, welcher eine erste Ventilkammer und eine zweite Ventilkammer definiert. Die Kammern sind durch eine flexible Wand voneinander getrennt. In der Wand ist eine zentrale Öffnung mit einer kreisförmigen Dichtlippe vorgesehen. Die Dichtlippe wirkt mit einem konischen Ventilelement zusammen. Durch Drücken des kreisförmigen Rings, welcher an der Aussenseite des Ventilkörpers im Bereich der Wand angeordnet ist, wird eine Öffnung zwischen Dichtlippe und Ventilelement freigegeben, wodurch das Ventil geöffnet wird. Auch bei diesem deformierbaren Ventil ist als Ventilsitz der gesamte Umfang des konischen Dichtelements vorgesehen, weswegen keine genaue Dosierung möglich ist.

In der US 6,039,305 ist ein Beissventil für eine Trinkblase mit einer deformierbaren Hülle und einem länglichen Ventilkörper beschrieben. Der Ventilkörper steht durch ein scheibenförmiges Dichtelement und ein stirnseitig angeordnetes Dichtelement mit der Hülle dichtend in Verbindung. Das Dichtelement ist durch eine Mehrzahl von Abzweigungskanälen durchdrungen. Zwischen den beiden Dichtelementen ist ein Raum in der Hülle definiert. Durch die Abzweigungskanäle kann Flüssigkeit durch das scheibenförmige Dichtelement in den Raum eintreten. In dem Raum befindet sich ein sich axial erstreckender Schaft, welcher die Dichtelemente miteinander verbindet. Wird die Hülle durch eine Kraft, beispielsweise durch Zusammenbeissen, im Bereich des Schafts von aussen deformiert, so wird sie teilweise nach innen in den Raum gedrückt. Dadurch bildet sich ein Durchlass zwischen dem Dichtelement und der Hülle, was zu einer Öffnung des Ventils führt. Bei Loslassen des Beissventils kehrt die Hülle in ihre Ausgangslage zurück, wodurch das Ventil abgedichtet wird. Da das Beissventil nicht den Zweck einer Dosierungsgenauigkeit verfolgt, wie sie im Laborbereich gefordert ist, dient, sondern den Zweck hat, einen Trinkschlauch für einen Benutzer zu öffnen und zu schliessen, ist das Beissventil noch ungenauer zu dosieren als der zuvor beschriebene Stand der Technik. Die Ungenauigkeit in der Dosierung rührt daher, dass der gesamte Zylindermantel des stirnseitigen Dichtelements als Ventilsitz wirkt. Für die Abdichtung eines Trinkschlauchs ist diese Art der Ventilfunktion jedoch ausreichend.

### Aufgabe der Erfindung

Aufgabe der vorliegenden Erfindung ist es, ein Handbedienteil mit einem in dem Handbedienteil integrierten Ventil vorzuschlagen, dass sehr einfach aufgebaut und dementsprechend kostengünstig ist und trotz des einfachen Aufbaus eine hohe Dosiergenauigkeit besitzt. Noch ein Ziel ist es unter der Vorgabe einer hohen Dosiergenauigkeit, ein Handbedienteil mit möglichst wenigen Einzelteilen zu zeigen, wodurch das Handbedienteil geringe Fehleranfälligkeit besitzt und einfach zu reinigen ist.

### Beschreibung

Die Erfindung betrifft ein Handbedienteil einer Absaugvorrichtung mit einem Ventil, an welches Handbedienteil stromabwärts eine Absaugleitung und stromaufwärts eine Pipette oder Pipettenspitze anschliessbar ist. Das Handbedienteil besitzt eine elastisch verformbare Ummantelung, welche einen Aufnahmeraum für einen Ventilkörper definiert. Die elastische Ummantelung kann zusammengedrückt werden, wodurch das Ventil geöffnet werden kann. Durch den Ventilkörper, welcher in die Ummantelung eingeführt ist, sind ein erster stromaufwärts gelegener erster Raum und ein zweiter stromabwärts gelegener zweiter Raum definiert. Die beiden Räume sind durch eine Strömungsverbindung verbunden, welche sich durch das Ventil öffnen und schliessen lässt. Die beiden Räume sind gegenüber der Umgebung durch einen ersten und zweiten Dichtkörper abgedichtet. Da die Ummantelung elastisch ist, ist eine ausreichende Dichtung einfach dadurch herzustellen, dass die Ummantelung im Bereich der Dichtkörper vorgespannt ist. Die Aussenkontur der Ummantelung kann auch eine andere Gestalt als einen Zylinder aufweisen. Denkbar wäre auch eine elliptische Formgebung oder andere Formgebungen, welche unterschiedliche Steifigkeiten entlang der Längsachse der Ummantelung bewirken.

Erfindungsgemäss wird die Aufgabe bei einer Vorrichtung gemäss Oberbegriff des Anspruchs 1 dadurch gelöst, dass der Ventilkörper einen im Wesentlichen radial abstehenden, eine Ventilöffnung aufweisenden Fortsatz besitzt. Die Ventilöffnung lässt sich daher exakt öffnen und schliessen, da durch die Ventilöffnung eine definierte Durchströmungsöffnung gegeben ist. Dadurch besitzt das erfindungsgemässe Handbedienteil eine hohe Dosiergenauigkeit. Es versteht sich, dass der Fortsatz in Strömungsverbindung mit dem Ventilkörper steht, um ein Ansaugen aus der Pipettenspitze zu ermöglichen. Als erfindungsrelevant ist ferner, dass die Ventilöffnung im Normalzustand an der Innenwandung der Ummantelung anliegt. Die Ummantelung wirkt daher wie ein Ventildeckel, welcher sich Abheben und Senken lässt. Zum Öffnen des Ventils ist die Ummantelung seitlich der Ventilöffnung in Abstand von der Ventilöffnung zusammendrückbar, wodurch eine Entfernung der Innenwandung von der Ventilöffnung bewirkt wird. Durch das Zusammendrücken der Ummantelung ist daher die Strömungsverbindung zwischen dem ersten und dem zweiten Raum herstellbar. Das Handbedienteil besitzt vorzugsweise lediglich zwei Bauteile, nämlich den Ventilkörper und die Ummantelung. Dies hat den Vorteil, dass das Handbedienteil äusserst kostengünstig herstellbar ist. Eine Fehleranfälligkeit ist weitgehend vermieden, da keine bewegten Teile vorhanden sind. Auch ist das Handbedienteil sehr einfach zu reinigen, indem der Ventilkörper aus der Ummantelung ziehbar ist und die beiden Einzelteile getrennt reinigbar sind. Grundsätzlich sind Toträume innerhalb des Ventilkörpers und der Ummantelung vermieden, was zu einer weiteren Erleichterung der Reinigung führt. Die Materialien der Ummantelung und des Ventilkörpers sind vorzugsweise so gewählt, dass diese chemisch beständig und autoklavierbar sind. Denkbar wäre es natürlich auch, dass der Ventilkörper und/oder die Ummantelung aus mehr als einem Teil bestehen.

Zweckmässigerweise besitzt der Fortsatz die Gestalt eines Rohrstücks. Diese Formgebung ermöglicht eine einfache Herstellung des Ventilkörpers. Insbesondere, wenn der Ventilkörper ein Gussteil oder Spritzgussteil ist, lässt er sich durch die Formgebung eines Rohrstücks leicht entformen. Ferner kann der Ventilsitz am freien Ende des Rohrstücks kreisrund sein. Diese Form des Ventilsitzes führt zu einer verbesserten Dichtigkeit gegenüber der Innenwandung der Ummantelung.

In einer besonders bevorzugten Ausführungsform besitzt der Ventilkörper zwei diametral angeordnete Ventilöffnungen an zwei freien Enden von zwei Fortsätzen bzw. Rohrstücken, welche an dem Ventilkörper zwischen dem ersten und dem zweiten Dichtkörper angeordnet sind. Durch die zwei Ventilöffnungen ist eine gute Dosiergenauigkeit bei grösseren benötigten Absaugvolumina gesichert.

Mit Vorteil sind der erste und der zweite Dichtkörper durch einen wenigstens teilweise durchströmbaren Verbindungskörper beabstandet, dessen Aussendurchmesser kleiner als der Innendurchmesser der Ummantelung ist. Dadurch ist ausreichend Platz vorhanden, um die Ummantelung im Bereich des Verbindungskörpers zusammenzudrücken. Das Ventil ist vollständig geöffnet, wenn die Innenwandung des Aufnahmeraums den Verbindungskörper berührt. Durch eine entsprechende Dimensionierung von Innendurchmesser des Aufnahmeraums, Aussendurchmesser des Verbindungskörpers und Durchmesser der Ventilöffnung lässt sich die Ventilcharakteristik einfach festlegen. Von Bedeutung ist, dass durch das Zusammendrücken der Ummantelung selbige im Bereich der wenigstens einen Ventilöffnung ausreichend nach aussen ausgewölbt ist, um die Ventilöffnung frei zu geben. Der Verbindungskörper steht zweckmässigerweise mit dem wenigstens einen Rohrstück in Strömungsverbindung. Vorzugsweise steht das eine Rohrstück orthogonal auf den Verbindungskörper, damit ein dichter Ventilsitz ermöglicht ist. Das eine Rohrstück besitzt einen Durchmesser, welcher zu beiden Seiten des Rohrstücks, relativ zu dessen Längsachse, noch ausreichend Freiraum ermöglicht, damit die Ummantelung zusammendrückbar ist.

In einem Ausführungsbeispiel ist der Aufnahmeraum im Wesentlichen zylindrisch, vorzugsweise kreiszylindrisch, ausgeformt. Der Aufnahmeraum ist daher mittels des Ventilkörpers einfach abzudichten, da keine Ecken oder Kanten vorhanden sind. Auch ist die Ummantelung bei Vorsehen eines zylindrischen Aufnahmeraums einfach aus der Herstellungsform zu entformen.

Als vorteilhaft erweist es sich, wenn der Ventilkörper ein erstes und zweites Ende besitzt, welche als ein erster und zweiter vorzugsweise zylindrischer Dichtkörper realisiert sind. Die Aussendurchmesser der Dichtkörper sind gleich oder vorteilhaft geringfügig grösser als die Innendurchmesser des Aufnahmeraums an den jeweiligen Berührungsbereichen. Unter einer geringfügigen Differenz zwischen dem Aussendurchmesser der Dichtkörper und dem Innendurchmesser des Aufnahmeraums ist bei dem erfindungsgemässen Handbedienteil eine Differenz zu verstehen, welcher vorzugsweise zwischen 0,1 mm und 2 mm liegt. Die elastisch aufweitbare Ummantelung liegt daher unter Vorspannung an dem ersten und zweiten Dichtkörper an. Dies führt zu einer einfachen und wirkungsvollen Abdichtung des Aufnahmeraums gegenüber der Umgebung, welche für die einwandfreie Saugwirkung unerlässlich ist.

Zweckmässigerweise besitzt der Ventilkörper zwei diametral angeordnete Ventilöffnungen, welche an dem Ventilkörper zwischen dem ersten und dem zweiten Dichtkörper angeordnet sind. Der Abstand der zwei Ventilöffnungen voneinander ist dabei vorzugsweise geringfügig grösser als der Innendurchmesser des Aufnahmeraums. Unter einer geringfügig grösseren Differenz zwischen dem Abstand der beiden Ventilöffnungen und dem Innendurchmesser des Aufnahmeraums ist bei dem erfindungsgemässen Handbedienteil eine Differenz zu verstehen, welche vorzugsweise zwischen 0,1 mm und 2 mm liegt. Der Aufnahmeraum ist daher im Bereich der zwei Ventilöffnungen elastisch aufgeweitet, wodurch im nicht zusammengedrückten Zustand der Ummantelung das Ventil abgedichtet ist. Die Lage der Ventilöffnungen ist relativ zur Ummantelung so gewählt, dass sie das Zusammendrücken der Ummantelung nicht behindern. Auch kann der Abstand der zwei Ventilöffnungen zur Längsachse des Ventilkörpers voneinander verschieden sein. Die Ventilöffnungen werden daher in diesem Fall bei Zusammendrücken der Ummantelung nicht gleichzeitig, sondern nacheinander freigegeben. Dies ist beispielsweise von Bedeutung, wenn das Ventil verlangsamt geöffnet werden soll.

In einem bevorzugten Ausführungsbeispiel ist der erste Raum durch den Zwischenraum, welcher in dem Aufnahmeraum bei aufgenommenem Ventilkörper von selbigem freigelassen ist, gebildet. Der zweite Raum ist demnach durch einen Strömungskanal, welcher sich stromabwärts in dem Ventilkörper von der wenigstens einen Ventilöffnung zu dem ersten Dichtkörper erstreckt, gebildet. In diesem Ausführungsbeispiel strömt eine abzusaugende Flüssigkeit zuerst in den Aufnahmeraum und nach Passieren des Ventils in den Strömungskanal. Die Abdichtung der Ventilöffnung ist daher verbessert, da nach Schliessen des Ventils, die Ummantelung an den Ventilsitz gesaugt wird.

In einem besonders bevorzugten Ausführungsbeispiel ist der erste Raum durch einen Strömungskanal, welcher sich stromabwärts in dem Ventilkörper von dem ersten Dichtkörper zu der wenigstens einen Ventilöffnung erstreckt, gebildet. Der zweite Raum ist folglich durch den Zwischenraum, welcher zwischen dem Aufnahmeraum und dem Ventilkörper bei aufgenommenem Ventilkörper entsteht, definiert. In diesem Ausführungsbeispiel strömt eine abzusaugende Flüssigkeit zuerst in den Strömungskanal und nach Passieren des Ventils in den Aufnahmeraum. Der Strömungskanal kann nach Absaugen der gewünschten Flüssigkeitsmenge noch leer gesaugt werden. Dies führt nach Schliessen des Ventils zu einer tropffreien Pipette oder Pipettenspitze.

Mit Vorteil ist an dem Ventilkörper zwischen dem wenigstens einen Ventilöffnung und dem zweiten Dichtkörper wenigstens eine Absaugöffnung vorgesehen, welche mit einem an der Aussenseite des zweiten Dichtkörpers angeordneten Schlauchnippel in Strömungsverbindung steht. Für die Funktion des Ventils ist es vorteilhaft, dass die Flüssigkeit aus dem Aufnahmeraum wieder absaugbar ist. Die Absaugöffnung ist möglichst nahe an dem zweiten Dichtkörper angeordnet, um die Strömungsverbindung zur Stirnseite des zweiten Dichtkörpers möglichst kurz halten zu können. Ferner kann in dem Aufnahmeraum, durch Vorsehen der Absaugöffnung, nach dem Schliessen des Ventils noch ein Unterdruck erzeugt werden, welcher die Dichtheit des Ventils verbessert.

Zweckmässigerweise sind zwei Absaugöffnungen durch einen Querkanal gebildet, welcher den Ventilkörper in einem Winkel zu dessen Längsachse, vorzugsweise in einem Winkel von 90°, durchdringt. Die zwei Absaugöffnungen sind demnach durch eine einfache Querbohrung in den Verbindungskörper realisiert.

Mit Vorteil ist an der Stirnseite des ersten oder des zweiten Dichtkörpers ein Schlauchnippel zur Befestigung der Absaugleitung angeordnet. Abhängig von der Strömungsrichtung ist die Absaugleitung daher rasch an dem ersten oder zweiten Dichtkörper durch einfaches Aufstecken anschliessbar.

Vorzugsweise sind Ventilkörper und Ummantelung form- und/oder reibschlüssig miteinander verbunden. In dem Aufnahmeraum ist mit Vorteil an dessen Innenwandung ein Steg angeordnet. Der Steg wirkt zur formschlüssigen Halterung des Ventilkörpers in dem Aufnahmeraum mit einer umlaufenden Nut, welche an dem ersten Dichtkörper an dessen Mantelfläche vorgesehen ist, zusammen. Der Ventilkörper ist dadurch in dem Aufnahmeraum gehalten. Durch das elastische Verhalten der Ummantelung ist der Ventilkörper
jedoch, beispielsweise für Reinigungszwecke, auch aus der Ummantelung herausziebar. Der Steg ist aus herstellungstechnischen Gründen und aus Gründen der Dichtigkeit vorzugsweise umlaufend geschlossen ausgeführt.

In einem weiteren Ausführungsbeispiel sind an der Mantelfläche der Ummantelung zwei diametral angeordnete Tastgriffe, beispielsweise für Daumen und Zeigefinger, ausgebildet. Die Tastgriffe zeigen dem Benutzer genau die Position zur Bedienung des Ventils an. Dies ist relevant, da die Ummantelung nur seitlich von der wenigstens einen Ventilöffnung zusammendrückbar ist.

Zweckmässigerweise ist an dem weiten Dichtkörper ein Fortsatz vorgesehen, welcher in einer Ausnehmung an der Ummantelung als eine Positionierhilfe und Verdrehsicherung aufnehmbar ist. Der Dichtkörper ist durch dieses einfache konstruktionstechnische Merkmal immer in der richtigen Position relativ zu den Tastgriffen in der Ummantelung aufgenommen.

Dadurch, dass an dem zweiten Dichtkörper mit Vorteil eine Einhängevorrichtung vorgesehen ist, wobei der Fortsatz die Einhängvorrichtung mit dem Ventilkörper verbindet, ist kein weiterer Fortsatz an dem Ventilkörper notwendig. Die Einhängevorrichtung dient der Halterung des Handbedienteils an einem Stativ o. ä. bei Nichtbenutzung.

Mit Vorteil besitzt der erste Dichtkörper eine Abflachung in Gestalt eines Kegelstumpfes. Die Abdichtung zwischen der Ummantelung und dem ersten Dichtkörper ist durch den Kegelstumpf verbessert, da dieser an einer in der Ummantelung vorgesehenen Negativform des Kegelstumpfes anliegt. Ferner dient der Kegelstumpf der erleichternden Einführung des Ventilkörpers in den Aufnahmeraum.

Zweckmässigerweise sind die Länge des Verbindungskörpers und die Elastizität der Ummantelung derart dimensioniert, dass das Ventil gegen den Atmosphärendruck und gegen die elastische Kraft der Ummantelung durch Zusammendrücken der Ummantelung geöffnet werden kann. Das Handbedienteil ist daher während seiner Herstellung an die erforderliche Saugleistung anpassbar.

Als vorteilhaft erweist es sich, wenn an dem Ende der Ummantelung, welches dem ersten Dichtkörper näher liegt, eine vorzugsweise sich verjüngende Aufnahme für Pipetten oder Pipettenspitzen vorgesehen ist, welche in Strömungsverbindung mit dem Ventilkörper steht. An dem Handbedienteil sind daher Pipetten oder Pipettenspitzen mit unterschiedlichen Durchmessern aufnehmbar.

In einer weiteren Ausführungsform steht die eine der zwei Ventilöffnungen mit der Aufnahme in Strömungsverbindung und die andere der zwei Ventilöffnungen steht mit dem Schlauchnippel in Strömungsverbindung. Ist das Übermass der zwei Ventilöffnungen gegenüber der Innenwandung vorzugsweise zusätzlich verschieden, so lässt sich mit dieser Ausführungsform eine Ventilverschluss-Charakteristik erzielen, bei der zuerst die Ventilöffnung, welche mit der Aufnahme in Verbindung steht, schliesst. Erst dann schliesst die Ventilöffnung, die mit dem Schlauchnippel in Verbindung steht. Dadurch lässt sich ein durch den Aussendruck unterstütztes Schliessen des Ventils bei gleichzeitig minimiertem Nachtropfen der Pipettenspitze erreichen.

Zweckmässigerweise ist die Ummantelung aus einem Elastomer und der Ventilkörper aus einem Duroplast oder Thermoplast, wie beispielsweise Polypropylen, hergestellt. Durch die Materialwahl weisen die Ummantelung und der Ventilkörper genau die Eigenschaften auf, welche für eine zuverlässige Ventilfunktion notwendig sind, auf. Vorzugsweise sind die gewählten Kunststoffe auch chemisch beständig, gut reinigbar und/oder autokalvierbar.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: ein erfindungsgemässes Handbedienteil, bei welchem ein Ventilkörper in einer Ummantelung aufgenommen ist;
- Figur 2:: eine Seitenansicht des Handbedienteils aus Figur 1;
- Figur 3:: eine Schnittdarstellung an der Stelle A-A aus Figur 2;
- Figur 4:: eine perspektivische Ansicht des Handbedienteils;
- Figur 5:: eine Vorderansicht des Ventilkörpers;
- Figur 6:: eine Seitenansicht des Ventilkörpers aus Figur 5;
- Figur 7:: eine Schnittdarstellung des Ventilkörpers an der Stelle A-A aus Figur 6;
- Figur 8:: den Ventilkörper in einer perspektivischen Ansicht;
- Figur 9:: eine Ummantelung zur Aufnahme des Ventilkörpers in einer Vorderansicht;
- Figur 10:: eine perspektivische Ansicht der Ummantelung und
- Figur 11:: eine Schnittdarstellung einer Ausführungsform mit einer weiteren möglichen Strömungsführung.

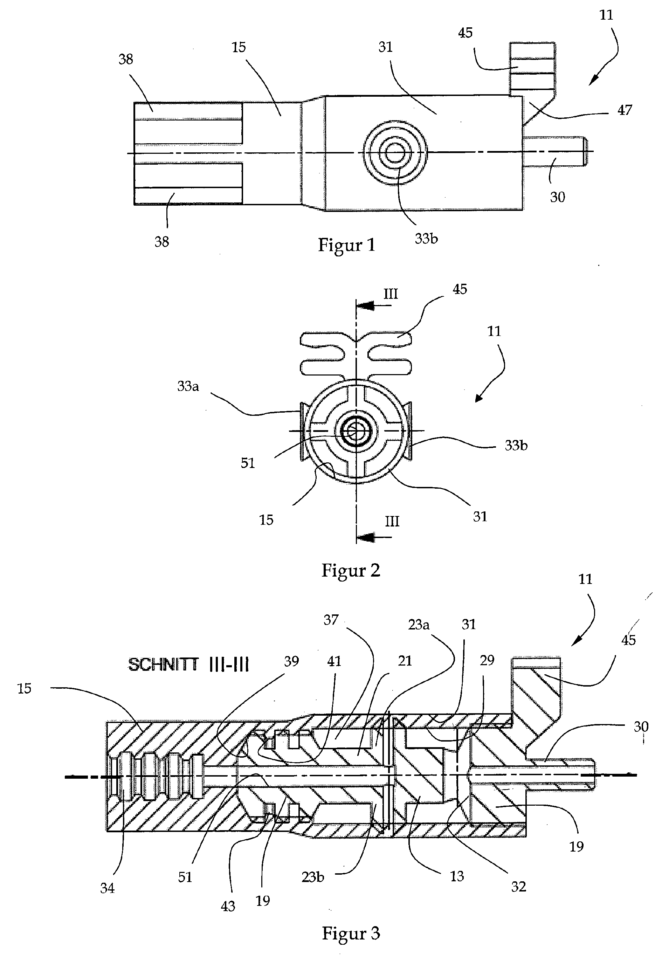

Die Figuren 1 bis 4 zeigen ein erfindungsgemässes Handbedienteil einer nicht näher gezeigten Absaugvorrichtung, das gesamthaft mit dem Bezugszeichen 11 bezeichnet ist. Das Handbedienteil 11 ist sehr einfach aufgebaut, da es lediglich aus zwei Teilen, nämlich einem Ventilkörper 13 und einer Ummantelung 15 besteht. In der Figur 3 ist der Ventilkörper 13 im Schnitt grob schraffiert und die Ummantelung 15, in welcher der Ventilkörper 13 aufgenommen ist, fein schraffiert dargestellt. Der Ventilkörper 13 ist aus einem gering verformbaren Kunststoff, wie beispielsweise Polypropylen hergestellt, wohingegen die Ummantelung 15 aus einem elastischen Werkstoff wie Kautschuk oder Silikon hergestellt ist. An einer ersten Stirnseite des Handbedienteils 11 ist eine Pipettenspitze aufsteckbar und an einer zweiten Stirnseite ist eine Absaugleitung, welche mit einer Vakuumpumpe in Verbindung steht, anschliessbar. Die Pipette und die Absaugleitung sind in den Figuren nicht dargestellt. Der Ventilkörper 13 und die Ummantelung 15 wirken derart zusammen, dass durch Zusammendrücken der Ummantelung 15 ein Strömungsdurchgang durch das Handbedienteil 11 geöffnet wird. Eine Flüssigkeit wird dann in die Pipettenspitze gesaugt und verlässt das Handbedienteil 11 durch die Absaugleitung. Befindet sich die elastische Ummantelung in ihrer Ausgangs- bzw. Normalstellung, so ist der Strömungsdurchgang durch das Handbediengerät 11 geschlossen und es liegt an der Pipettenspitze keine Saugwirkung an. Die Ventilfunktion, welche durch das Zusammenwirken des Ventilkörpers 13 und der Ummantelung 15 realisiert ist, ist im Folgenden detailliert beschrieben.

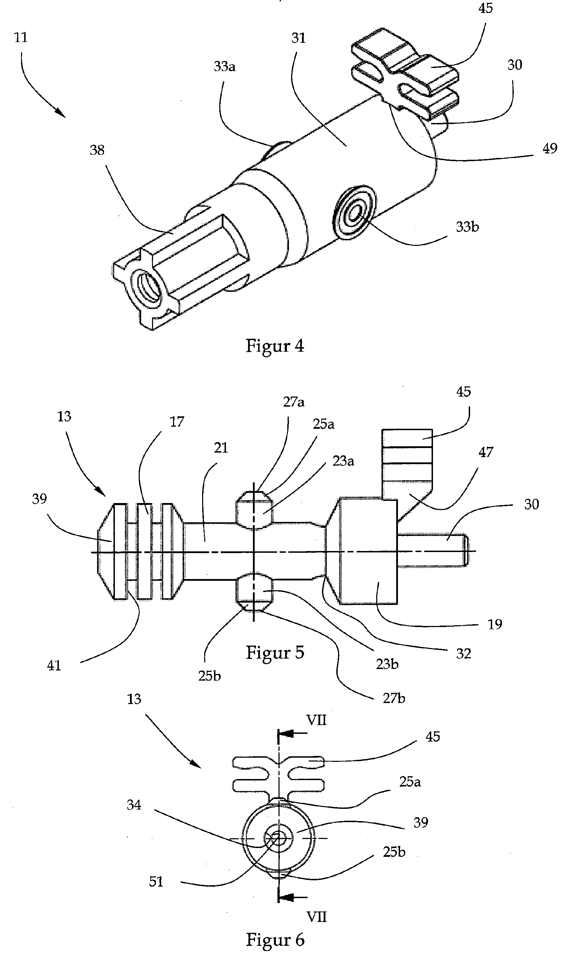

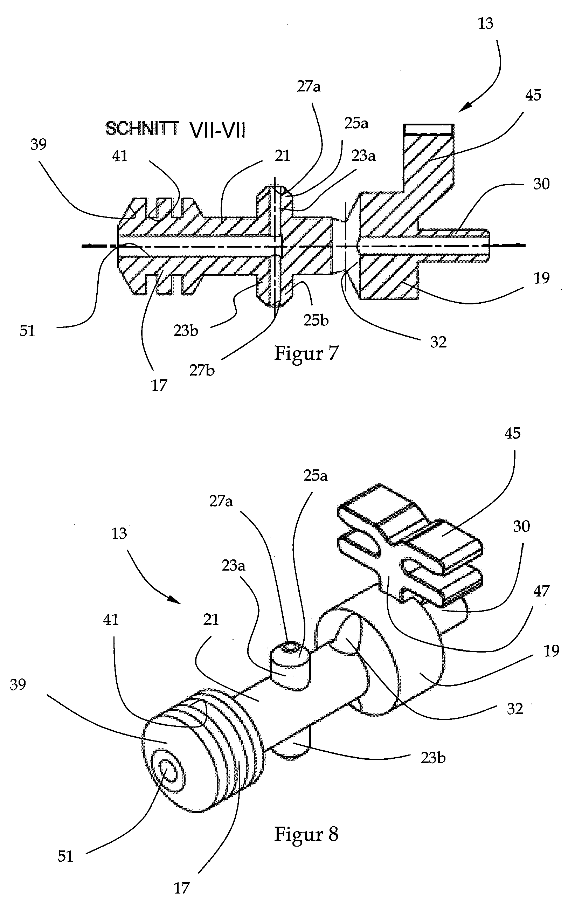

In den Figuren 5 bis 8 ist der Ventilkörper 13 dargestellt. Das erste und zweite Ende des Ventilkörpers sind als ein erster Dichtkörper 17 und ein zweiter Dichtkörper 19 ausgebildet. Der erste und zweite Dichtkörper 17,19 besitzen zylindrische Form und sind durch einen zylindrischen Verbindungskörper 21 voneinander beabstandet. Von dem Verbindungskörper 21 erstrecken sich zwei Rohrstücke 23a,23b, deren freie Enden als Ventilsitze 25a,25b mit Ventilöffnungen 27a,27b ausgebildet sind. Die Ventilöffnungen 27a,27b liegen im geschlossenen Zustand des Ventils an der Innenwandung 29 der Ummantelung 15 an. Zu diesem Zweck sind die Stirnseiten der Rohrstücke vorzugsweise gewölbt resp. dem Radius der Ummantelung angepasst ausgebildet. Zum Anschluss der Absaugleitung ist an der freien Stirnseite des zweiten Dichtkörpers 19 ein Schlauchnippel 30 vorgesehen. Der Schlauchnippel 30 steht mit einem Querkanal 32 in Strömungsverbindung. Der Querkanal 32 ist an dem Verbindungskörper 21 zwischen dem zweiten Dichtkörper 19 und den Rohrstücken 23a,23b vorgesehen.

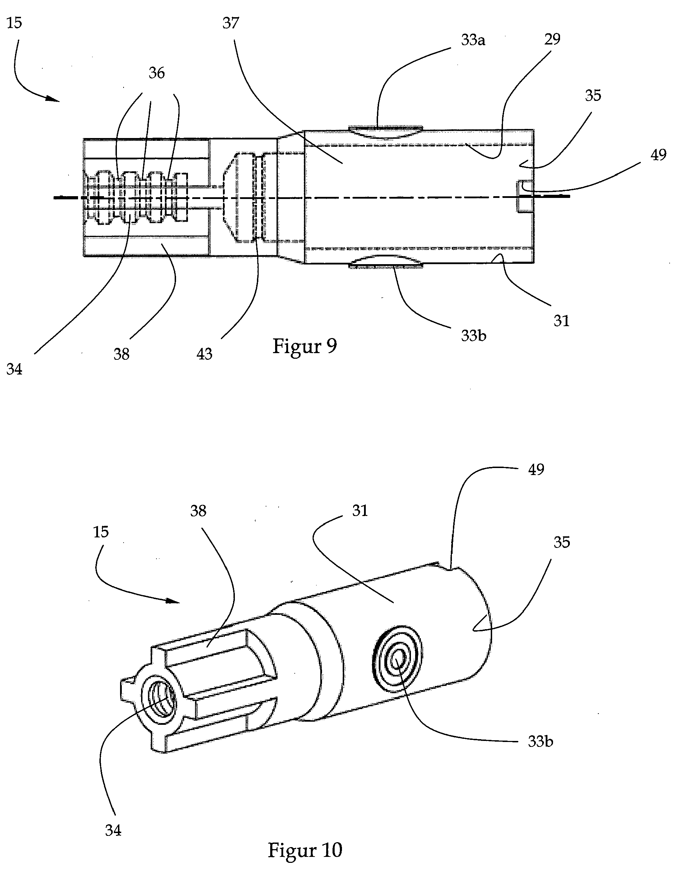

Die Ummantelung 15 ist in den Figuren 9 und 10 dargestellt. Zum Öffnen des Ventils ist, wie weiter oben bereits erwähnt, die Ummantelung 13 zusammenzudrücken. Um dem Benutzer die richtige Position anzuzeigen, an welchen die Ummantelung zusammenzudrücken ist, sind an der Aussenwandung 31 der Ummantelung zwei Tastgriffe 33a,33b diametral angeordnet. An der Stirnseite der Ummantelung 15, welche dem ersten Dichtkörper 17 zugewandt ist, ist eine sich verjüngende Aufnahme 34 für Pipetten oder Pipettenspitzen vorgesehen. Durch die Verjüngung sind Pipettenspitzen mit unterschiedlichen Durchmessern aufnehmbar. Zur sicheren Halterung der verschiedenen Pipettenspitzen ist die Aufnahme 34 mit Absätzen 36 ausgestattet. Stabilisierungsstege 38 sind an der Aussenwandung 31 im Bereich der Aufnahme 34 angeordnet, um den Halt der Pipettenspitze in der Aufnahme 34 zu verbessern.

Der Ventilkörper wird über eine Aufnahmeöffnung 35 in einen zylindrischen Aufnahmeraum 37 eingeschoben. Um einen dichtenden Sitz zwischen dem ersten und zweiten Dichtkörper 17,19 und der Innenwandung 29 herzustellen, besitzen die Dichtkörper 17,19 einen Aussendurchmesser, welcher geringfügig grösser als die Innendurchmesser der Innenwandung 29 an den entsprechenden Stellen sind. Zur Aufnahme der Dichtkörper 17,19 wird der Aufnahmeraum 37 im Bereich, an dem die Dichtkörper 17,19 an der Innenwandung 29 anliegen, aufgeweitet. Durch die elastischen Eigenschaften der Ummantelung 15 liegt die Innenwandung 29 unter Vorspannung an den Dichtkörpern an. Die dichtende Wirkung des ersten Dichtkörpers 17 wird durch sein freies Ende in Form eine Abflachung in Gestalt eines Kegelstumpfes 39 noch weiter verbessert. Ferner dient der Kegelstumpf 39 dem vereinfachten Einführen des Ventilkörpers 13 in den Aufnahmeraum 37. Aus Figur 3 ist zu erkennen, dass die diametral an dem Verbindungskörper angeordneten Ventilsitze 25a,25b einen Abstand zueinander besitzen, welcher geringfügig grösser als der Innendurchmesser des Aufnahmeraums 37 an der entsprechenden Stelle ist. Demnach liegt die Innenwandung 29 auch an den Ventilsitzen 25a,25b unter Vorspannung an.

Um den Sitz des Ventilkörpers 13 in dem Aufnahmeraum 37 noch weiter zu verbessern, ist an dem ersten Dichtkörper 17 eine umlaufende Nut 41 vorgesehen. Die Nut 41 wirkt formschlüssig mit einem vorzugsweise umlaufenden Steg 43 zusammen, welcher an der Innenwandung 29 im Bereich des ersten Dichtkörpers 17 ausgeformt ist. Am freien Ende des zweiten Dichtkörper 19 ist an dessen Aussenwandung eine Einhängvorrichtung 45 mittels eines Fortsatzes 47 festgelegt. Bei Nichtgebrauch ist das Handbedienteil 11 beispielsweise an einem Stativ oder der Vakuumpumpe einhängbar. Der Fortsatz 47 dient auch als Positionierhilfe, sodass die Tastgriffe 33a,33b parallel zu den Rohrstücken 23a,23b ausgerichtet sind. Dazu ist der Fortsatz 47 in einer Aufnahme 49 unter Formschluss aufgenommen, welche am Übergang von der Aussenwandung 31 zur Aufnahmeöffnung 35 vorgesehen ist. Ferner dient der Fortsatz 47 als eine Verdrehsicherung, da der Ventilkörper 13 relativ zur Ummantelung 15 nicht mehr verdrehbar ist, wenn der Fortsatz 47 in der Aufnahme 49 aufgenommen ist.

Der Strömungsfluss lässt sich am besten aus Figur 3 erkennen. Werden die Tastgriffe 33a,33b zusammengedrückt, so wird eine Entfernung der Innenwandung 29 von den Ventilsitzen 25a,25b bewirkt, indem die Ummantelung entlang der Rohrstücke 23a,23b aus ihrer im Wesentlichen kreisrunden Querschnittsform in eine elliptische Querschnittsform gedrück wird. Eine abzusaugende Flüssigkeit wird aus einer in der Ummantelung gehaltenen Pipettenspitze in das Handbediengerät gesaugt. Die Flüssigkeit tritt an der freien Stirnseite des ersten Dichtkörpers 17 in einen Strömungskanal 51 ein. Durch den Strömungskanal 51 verzweigt sich die Flüssigkeit in die beiden Rohrstücke 23a,23b und verlässt diese an den Ventilöffnungen 27a,27b. Die Flüssigkeit breitet sich nunmehr in den Bereichen des Aufnahmeraums 37 aus, welche von dem Ventilkörper 13 nicht ausgefüllt sind. Durch den Querkanal 32, den zweiten Dichtkörper 19 und den Schlauchnippel verlässt die Flüssigkeit das Handbedienteil 11. Der Flüssigkeitsstrom kann dosiert werden, indem die Tastgriffe 33a,33b nicht bis zum Anschlag an dem Verbindungskörper 21 zusammengedrückt werden. Nach Abschluss des Absaugvorgangs kann die Pipettenspitze noch leer gesaugt werden, bevor das Ventil geschlossen wird. Die Pipettenspitze tropft daher nicht nach. Bei Loslassen der Tastgriffe 33a,33b wird das Ventil geschlossen, indem die Innenwandung 29 mit den Ventilsitzen 25a,25 in Kontakt tritt. Durch den Querkanal 32 wird der Aufnahmeraum 37 leer gesaugt, wodurch in dem Aufnahmeraum 37 ein Unterdruck aufgebaut wird. Eine Reinigung des Handbedienteils 11 nach abgeschlossener Benutzung ist sehr einfach durchzuführen. Der Ventilkörper 13 ist lediglich aus der Ummantelung zu ziehen. Die beiden Teile können dann separat, beispielsweise durch eine Autoklavierung, gereinigt werden.

Denkbar ist es auch, dass die Strömungsrichtung umgekehrt verläuft, d.h., dass die Flüssigkeit in das Handbedienteil 11 durch den zweiten Dichtkörper 19 eintritt. Bei dieser Ausführungsform wird der Aufnahmeraum 37 nach Schliessen des Ventils zwar nicht vollständig leer gesaugt, jedoch wird die Innenwandung 29 nach Schliessen des Ventils an die Ventilsitze 25a,25b gesaugt. Dies führt zu einer verbesserten Dichtigkeit des Ventils.

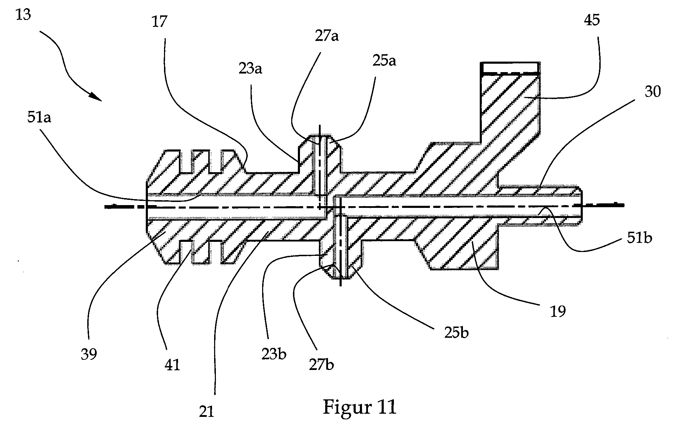

Auch ist eine Strömungsführung denkbar, welche in Figur 11 dargestellt ist. Bei dieser steht der Ventilsitz 25a mit der Aufnahme 34 über einen Strömungskanal 51a in Strömungsverbindung. Der Ventilsitz 25b steht mit dem Schlauchnippel 30 über einen Strömungskanal 51b in Strömungsverbindung. Figur 11 zeigt, dass die Rohrstücke 23a und 23b zueinander versetzt an dem Verbindungsstück 21 angeordnet sind, damit die Strömungskanäle 51a und 51b sich nicht überschneiden. Zusätzlich ist das Rohrstück 23a geringfügig länger als das Rohrstück 23b ausgeführt. Die Flüssigkeit tritt während des Absaugvorgangs durch die Ventilöffnung 27a in den Aufnahmeraum 37 ein und verlässt diesen durch die Ventilöffnung 27b. Wird die Ummantelung 15 von dem Benutzer an den Tastgriffen 33a,33b losgelassen, so wird der Ventilsitz 25a von der Innenwandung 29 zuerst verschlossen. Erst danach wird die Innenwandung 29 an den Ventilsitz 25b gesaugt. Durch diese in zeitlicher Abfolge getrennte Schliessung der Ventilsitze 25a,25b, kann ein Nachtropfen der Pipettenspitze vermieden werden. Auch wird das Verschliessen der Ventilsitze 25a,25b durch den Aussendruck, d.h. durch den Atmosphärendruck, unterstützt.

### Legende:

- 11: Handbedienteil
- 13: Ventilkörper
- 15: Ummantelung
- 17: Erster Dichtkörper
- 19: Zweiter Dichtkörper
- 21: Verbindungskörper
- 23a,23b: Rohrstücke
- 25a,25b: Ventilsitze
- 27a,27b: Ventilöffnungen
- 29: Innenwandung der Ummantelung
- 30: Schlauchnippel
- 31: Aussenwandung der Ummantelung
- 32: Querkanal
- 33a,33b: Tastgriffe
- 34: Sich verjüngende Aufnahme
- 35: Aufnahmeöffnung
- 36: Ansätze
- 37: Aufnahmeraum
- 38: Stabilisierungsstege
- 39: Kegelstumpf
- 41: Nut
- 43: Steg
- 45: Einhängevorrichtung
- 47: Fortsatz
- 49: Aufnahme
- 51, 51a,51b: Strömungskanal

## Patentansprüche

1. Handbedienteil (11) einer Absaugvorrichtung mit einem Ventil, an welches Handbedienteil (11) stromabwärts eine Absaugleitung und stromaufwärts eine Pipette oder Pipettenspitze anschliessbar ist, mit
- einer elastisch verformbaren Ummantelung (15), welche einen Aufnahmeraum (37) für einen Ventilkörper (13) definiert,
- einem in der Ummantelung (15) aufgenommenen Ventilkörper (13), welcher im Aufnahmeraum (37) einen stromaufwärts gelegenen ersten Raum und einen stromabwärts gelegenen zweiten Raum definiert und an seinen Enden einen ersten und zweiten Dichtkörper (17,19) besitzt, und
- einer unterbrechbaren Strömungsverbindung zwischen dem ersten und dem zweiten Raum,
**dadurch gekennzeichnet,**
**dass** der Ventilkörper (13) einen im Wesentlichen radial abstehenden, eine Ventilöffnung (27) aufweisenden Fortsatz (23) besitzt, welche Ventilöffnung (27) im Normalzustand an der Innenwandung (29) der Ummantelung (15) anliegt, und dass die Ummantelung (29) seitlich des Fortsatzes (23) von dem Ventilkörper beabstandet ist, sodass durch Zusammendrücken der Ummantelung (29) die Strömungsverbindung zwischen dem ersten und dem zweiten Raum herstellbar ist.

2. Handbedienteil (11) nach Anspruch 1, **dadurch gekennzeichnet, dass** der Fortsatz die Gestalt eines Rohrstücks (23) besitzt.

3. Handbedienteil (11) nach einem der Ansprüche 1 oder 2, **dadurch gekennzeichnet, dass** der Ventilkörper (13) zwei diametral angeordnete Ventilöffnungen (27a,27b) an zwei freien Enden von zwei Fortsätzen bzw. Rohrstücken (23a,23b) besitzt, welche an dem Ventilkörper (13) zwischen dem ersten und dem zweiten Dichtkörper (17,19) angeordnet sind.

4. Handbedienteil (11) nach einem der Ansprüche 1 bis 3, **dadurch gekennzeichnet, dass** der erste und der zweite Dichtkörper (17,19) durch einen wenigstens teilweise durchströmbaren Verbindungskörper (21) beabstandet sind, dessen Aussendurchmesser kleiner als der Innendurchmesser der Ummantelung (15) ist und mit dem Fortsatz bzw. dem Rohrstück (23) in Strömungsverbindung steht.

5. Handbedienteil (11) nach einem der Ansprüche 1 bis 4, **dadurch gekennzeichnet, dass** der Aufnahmeraum (37) im Wesentlichen zylindrisch ausgeformt ist.

6. Handbedienteil (11) nach einem der Ansprüche 1 bis 5, **dadurch gekennzeichnet, dass** die Aussendurchmesser der Dichtkörper (17,19) gleich oder geringfügig grösser als die Innendurchmesser des Aufnahmeraums (37) an den jeweiligen Berührungsbereichen sind.

7. Handbedienteil (11) nach einem der Ansprüche 3 bis 5, **dadurch gekennzeichnet, dass** der Abstand der Ventilöffnungen (27a,27b) voneinander grösser als der Innendurchmesser des Aufnahmeraums (37) ist, wobei der Abstand der zwei Ventilöffnungen (27a,27b) zur Längsachse des Ventilkörpers (13) voneinander verschieden sein kann.

8. Handbedienteil (11) nach einem der Ansprüche 1 bis 7, **dadurch gekennzeichnet, dass** an dem Ventilkörper (13) zwischen der Ventilöffnung (27) und dem zweiten Dichtkörper (19) wenigstens eine Absaugöffnung vorgesehen ist, welche mit einem an der Aussenseite des zweiten Dichtkörpers angeordneten Schlauchnippel (30) in Strömungsverbindung steht.

9. Handbedienteil (11) nach Anspruch 8, **dadurch gekennzeichnet, dass** zwei Absaugöffnungen durch einen Querkanal (32) gebildet sind, welcher den Ventilkörper (13) schräg zu dessen Längsachse, vorzugsweise in einem Winkel von 90°, durchdringt.

10. Handbedienteil (11) nach einem der Ansprüche 1 bis 9, **dadurch gekennzeichnet, dass** an der Aussenwandung (31) der Ummantelung (15) zwei diametral angeordnete Tastgriffe (33a,33b), beispielsweise für Daumen und Zeigefinger, ausgebildet sind.

11. Handbedienteil (11) nach einem der Ansprüche 1 bis 10, **dadurch gekennzeichnet, dass** an dem zweiten Dichtkörper (19) ein Fortsatz (47) vorgesehen ist, welcher in einer Ausnehmung (49) an der Ummantelung (15) als eine Positionierhilfe und Verdrehsicherung aufnehmbar ist.

12. Handbedienteil (11) nach einem der Ansprüche 4 bis 11, **dadurch gekennzeichnet, dass** die Länge des Verbindungskörpers (21) und die Elastizität der Ummantelung (15) derart dimensioniert sind, dass das Ventil gegen den Aussendruck durch Zusammendrücken der Ummantelung (15) geöffnet werden kann.

13. Handbedienteil (11) nach einem der Ansprüche 1 bis 12, **dadurch gekennzeichnet, dass** der erste Raum durch den Zwischenraum definiert ist, welcher in dem Aufnahmeraum (37) bei aufgenommenem Ventilkörper (13) von dem Ventilkörper (13) freigelassen ist, und der zweite Raum durch einen Strömungskanal (49), welcher sich stromabwärts in dem Ventilkörper (13) von der wenigstens einen Ventilöffnung (27) zu dem ersten Dichtkörper (17) erstreckt, gebildet ist.

14. Handbedienteil (11) nach einem der Ansprüche 1 bis 12, **dadurch gekennzeichnet, dass** der erste Raum durch einen Strömungskanal (49), welcher sich stromabwärts in dem Ventilkörper (13) von dem ersten Dichtkörper (17) zu der wenigstens einen Ventilöffnung (27) erstreckt, gebildet ist und der zweite Raum durch den Zwischenraum, welcher in dem Aufnahmeraum (37) bei aufgenommenem Ventilkörper (13) von dem Ventilkörper (13) freigelassen ist, definiert ist.

15. Handbedienteil (11) nach Anspruch 3 **dadurch gekennzeichnet, dass** die eine der zwei Ventilöffnungen (27a,27b) mit einer Aufnahme (34) für Pipetten oder Pipettenspitzen in Strömungsverbindung steht und die andere der zwei Ventilöffnungen (27a,27b) mit einem Schlauchnippel (30) in Strömungsverbindung steht.

## Claims

1. Hand-held operating unit (11) of a suction device with a valve, hand-held operating unit (11) to which a suction pipe can be connected downstream and a pipette or a pipette tip can be connected upstream with
- an elastically deformable sheathing (15) that defines a receiving space (37) for a valve body (13),
- a valve body (13) received in the sheathing (15) that defines a first space situated upstream in the receiving space (37) and a second space situated downstream and that has a first and a second sealing body (17, 19) at its ends and
- an interruptible fluidic connection between the first and the second space, **characterized in**
**that** the valve body (13) has a substantially radially projecting extension (23) that has a valve opening (27), the valve opening (27) bearing in normal state on the inner wall (29) of the sheathing (15), and that the sheathing (29) is spaced from the valve body laterally from the extension (23) so that the fluidic connection can be produced between the first and the second space by pressing together the sheathing (29).

2. Hand-held operating unit (11) according to claim 1, **characterized in that** the extension has the shape of a pipe section (23).

3. Hand-held operating unit (11) according to one of the claims 1 or 2, **characterized in that** the valve body (13) has two diametrically opposed valve openings (27a, 27b) at two free ends of two extensions or pipe sections (23a, 23b) that are placed on the valve body (13) between the first and the second sealing body (17, 19).

4. Hand-held operating unit (11) according to one of the claims 1 to 3, **characterized in that** the first and the second sealing body (17, 19) are spaced by an at least partially flow-through connecting body (21), the outer diameter of which is smaller than the inner diameter of the sheathing (15) and that is in fluidic connection with the extension or the pipe section (23).

5. Hand-held operating unit (11) according to one of the claims 1 to 4, **characterized in that** the receiving space (37) is formed substantially cylindrical.

6. Hand-held operating unit (11) according to one of the claims 1 to 5, **characterized in that** the outer diameters of the sealing bodies (17, 19) is equal to or slightly bigger than the inner diameters of the receiving space (37) on the respective contact areas.

7. Hand-held operating unit (11) according to one of the claims 3 to 5, **characterized in that** the distance of the valve openings (27a, 27b) one from another is bigger than the inner diameter of the receiving space (37), whereby the distance of the two valve openings (27a, 27b) to the longitudinal axis of the valve body (13) can be different from each other.

8. Hand-held operating unit (11) according to one of the claims 1 to 7, **characterized in that** at least one suction opening is provided on the valve body (13) between the valve opening (27) and the second sealing body (19), this suction opening being in fluidic connection with a hose nipple (30) placed on the outer side of the second sealing body.

9. Hand-held operating unit (11) according to claim 8, **characterized in that** two suction openings are formed by a transverse channel (32) that gets through the valve body (13) obliquely to the longitudinal axis thereof, preferably with an angle of 90°.

10. Hand-held operating unit (11) according to one of the claims 1 to 9, **characterized in that** two diametrically opposed operating grips (33a, 33b) are formed on the outer wall (31) of the sheathing (15), for example for the thumb and the index.

11. Hand-held operating unit (11) according to one of the claims 1 to 9, **characterized in that** an extension (47) is provided on the second sealing body (19), which extension can be received as a positioning aid and an anti-rotation device in a recess (49) on the sheathing (15).

12. Hand-held operating unit (11) according to one of the claims 4 to 11, **characterized in that** the length of the connecting body (21) and the elasticity of the sheathing (15) are dimensioned in such a way that the valve can be opened against the outer pressure by pressing together the sheathing (15).

13. Hand-held operating unit (11) according to one of the claims 1 to 12, **characterized in that** the first space is defined by the intermediate space that is left free by the valve body (13) in the receiving space (37), the valve body (13) being placed in the receiving space, and the second space is formed by a flow channel (49) that extends downstream in the valve body (13) from the at least one valve opening (27) to the first sealing body (17).

14. Hand-held operating unit (11) according to one of the claims 1 to 12, **characterized in that** the first space is formed by a flow channel (49) that extends downstream in the valve body (13) from the first sealing body (17) to the at least one valve opening (27) and the second space is defined by the intermediate space that is left free by the valve body (13) in the receiving space, the valve body (13) being placed in the receiving space.

15. Hand-operating unit (11) according to claim 3, **characterized in that** the one of the two valve openings (27a, 27b) is in fluidic connection with a receiving space (34) for pipettes or pipette tips and the other of the two valve openings (27a, 27b) is in fluidic connection with a hose nipple (30).

## Revendications

1. Partie de commande manuelle (11) d'un dispositif d'aspiration avec une valve, partie de commande manuelle (11) à laquelle une conduite d'aspiration peut être raccordée en aval et une pipette ou une pointe de pipette peut être raccordée en amont, avec
- une enveloppe déformable élastiquement (15) qui définit un espace de logement (37) pour un corps de valve (13),
- un corps de valve (13) logé dans l'enveloppe (15), qui définit, dans l'espace de logement (37), un premier espace situé en amont et un second espace situé en aval et qui possède, à ses extrémités, un premier et un second corps d'étanchéité (17, 19) et
- une communication fluidique qui peut être interrompue entre le premier et le second espace,
**caractérisée en ce**
**que** le corps de valve (13) possède un prolongement (23) qui fait saillie substantiellement dans le sens radial, qui présente une ouverture de valve (27), laquelle ouverture de valve (27) s'appuie, à l'état normal, contre la paroi intérieure (29) de l'enveloppe (15), et que l'enveloppe (29) est espacée du corps de valve latéralement au prolongement (23) si bien que le liaison d'écoulement entre le premier et le second espace peut être réalisée en comprimant l'enveloppe (29).

2. Partie de commande manuelle (11) selon la revendication 1, **caractérisée en ce que** le prolongement possède la configuration d'une partie de tube (23).

3. Partie de commande manuelle (11) selon l'une des revendications 1 ou 2, **caractérisée en ce que** le corps de valve (13) possède deux ouvertures de valve placées diamétralement opposées (27a, 27b) à deux extrémités libres de deux prolongements ou parties de tube (23a, 23b) qui sont placées sur le corps de valve (13) entre le premier et le second corps d'étanchéité (17, 19).

4. Partie de commande manuelle (11) selon l'une des revendications 1 à 3, **caractérisée en ce que** le premier et le second corps d'étanchéité (17, 19) sont espacés par un corps de liaison (21) qui peut être au moins partiellement traversé par un fluide dont le diamètre extérieur est plus petit que le diamètre intérieur de l'enveloppe (15) et qui est en communication fluidique avec le prolongement ou la partie de tube (23).

5. Partie de commande manuelle (11) selon l'une des revendications 1 à 4, **caractérisée en ce que** l'espace de logement (37) est formé substantiellement cylindriquement.

6. Partie de commande manuelle (11) selon l'une des revendications 1 à 5, **caractérisée en ce que** les diamètres extérieurs des corps d'étanchéité (17, 19) sont égaux ou légèrement supérieurs aux diamètres intérieurs de l'espace de logement (37) sur les zones de contact respectives.

7. Partie de commande manuelle (11) selon l'une des revendications 3 à 5, **caractérisée en ce que** la distance des ouvertures de valve (27a, 27b) l'une par rapport à l'autre est plus grande que le diamètre intérieur de l'espace de logement (37), la distance des deux ouvertures de valve (27a, 27b) par rapport à l'axe longitudinal du corps de valve (13) pouvant être différente l'une de l'autre.

8. Partie de commande manuelle (11) selon l'une des revendications 1 à 7, **caractérisée en ce qu'**au moins une ouverture d'aspiration est prévue sur le corps de valve (13) entre l'ouverture de valve (27) et le second corps d'étanchéité (19), ouverture d'aspiration qui est en communication fluidique avec un raccord de tuyau (30) placé sur le côté extérieur du second corps d'étanchéité.

9. Partie de commande manuelle (11) selon la revendication 8, **caractérisée en ce que** deux ouvertures d'aspiration sont formées par un canal transversal (32) qui traverse le corps de valve (13) en biais vers son axe longitudinal, de préférence en formant un angle de 90°.

10. Partie de commande manuelle (11) selon l'une des revendications 1 à 9, caractérisée en ce des endroits de prise à appuyer placés diamétralement opposés (33a, 33b) sont formés sur la paroi extérieure (31) de l'enveloppe (15), par exemple pour le pouce et l'index.

11. Partie de commande manuelle (11) selon l'une des revendications 1 à 10, **caractérisée en ce qu'**il est prévu un prolongement (47) sur le second corps d'étanchéité (19), prolongement qui peut être logé dans un évidement (49) sur l'enveloppe (15) en tant qu'auxiliaire de positionnement et que sécurité anti-rotation.

12. Partie de commande manuelle (11) selon l'une des revendications 4 à 11, caractérisée en ce la longueur du corps de liaison (21) et l'élasticité de l'enveloppe (15) sont dimensionnées telles que la valve peut être ouverte contre la pression extérieure en comprimant l'enveloppe (15).

13. Partie de commande manuelle (11) selon l'une des revendications 1 à 12, **caractérisée en ce que** le premier espace est défini par l'espace intermédiaire qui est laissé libre par le corps de valve (13) dans l'espace de logement (37), lorsque le corps de valve (13) est logé, et le second espace est formé par un canal d'écoulement (49) qui s'étend en aval dans le corps de valve (13) de l'ouverture de valve qui existe au moins (27) au premier corps d'étanchéité (17).

14. Partie de commande manuelle (11) selon l'une des revendications 1 à 12, caractérisée en ce le premier espace est formé par un canal d'écoulement (49) qui s'étend en aval dans le corps de valve (13) du premier corps d'étanchéité (17) à l'ouverture de valve qui existe au moins (27) et le second espace est défini par l'espace intermédiaire qui est laissé libre par le corps de valve (13) dans l'espace de logement (37), lorsque le corps de valve (13) est logé.

15. Partie de commande manuelle (11) selon la revendication 3, **caractérisée en ce que** l'une des deux ouvertures de valve (27a, 27b) est en communication fluidique avec un logement (34) pour des pipettes ou des pointes de pipette et l'autre des deux ouvertures de valve (27a, 27b) est en communication fluidique avec un raccord de tuyau (30).
